# EUROPÄISCHE PATENTSCHRIFT

(11) **EP 1 641 207 B1**
(45) Veröffentlichungstag und Bekanntmachung des Hinweises auf die Patenterteilung: **19.09.2007**
(21) Anmeldenummer: 04022978.3
(22) Anmeldetag: 27.09.2004
(51) Int. Cl.: H04L 29/06

(54) **Verfahren und Steuerungsprogramm zum Aufbau einer gesicherten Kommunikationsverbindung**
Method and program for setting up a secure connection
Procédé et logiciel pour l'établissement d'une connection sécurisée

(43) Veröffentlichungstag der Anmeldung: 29.03.2006
(73) Patentinhaber: Fujitsu Siemens Computers GmbH, 80807 München (DE)
(72) Erfinder: Schmartz, Pierre, 81667 München (DE); Umlauf, Justin Ralf, 82194 Gröbenzell (DE); Wutscher, Alois, 86926 Greifenberg A. A (DE)
(74) Vertreter: Epping - Hermann - Fischer

(56) Entgegenhaltungen:
- EP-A- 1 187 428
- DE-A1- 10 023 868
- DE-A1- 10 238 928
- US-A1- 2003 142 806

## Beschreibung

Authentifizierte Kommunikationsverbindungen werden beispielsweise gewünscht, wenn ein Dienstleister auf einen Rechner eines Kunden über ein öffentliches Kommunikationsnetz, wie Telefonnetz oder Internet, zugreifen soll. Aus Sicherheitsgründen wird vielfach ausschließlich berechtigten Benutzern ein Zugriff auf einen Kundenrechner eingeräumt. Ein Ansatz zur Sicherstellung einer Benutzeridentität sind Rückrufverfahren. Bei einem Rückrufverfahren gibt ein Benutzer seine Zugangsberechtigung an. Danach fragt ein Authentifizierungssystem über einen anderen Kommunikationskanal, beispielsweise eine weitere Telefonverbindung, ein zweites Mal die Zugangsberechtigung ab und schaltet dann erst den Zugang frei.

Bisher bekannte Rückrufverfahren sind jedoch nicht durchgängig automatisiert und erfordern in deutlichem Umfang manuelle Eingriffe. Ein weiterer Nachteil ist eine geringe Flexibilität im Hinblick auf eine kontextabhängige Auswahl von Netzknoten, zwischen denen eine gesicherte Kommunikationsverbindung aufgebaut werden soll, da die Netzknoten in der Regel fest vorgegeben sind. Gerade bei einer Auslagerung von Betriebsführungs- und Wartungsaufgaben an größere, spezialisierte Dienstleistungsunternehmen äußert sich dieser Nachteil. In derartigen Fällen ist nämlich eine Vielzahl von Mitarbeitern mit einer Betreuung zahlreicher unterschiedlicher Kunden befaßt, wobei eine Zuordnung zwischen Mitarbeiter und zu betreuendem Kunden in der Regel nicht fest ist.

Die Druckschrift DE 10023868 A1 beschreibt ein Verfahren zum Aufbau einer Kommunikationsverbindung, bei dem eine Aufforderung zum Aufbau der Verbindung eine den ersten Benutzer identifizierende Kennung umfasst, die aus mehreren Teilen besteht.

Der vorliegenden Erfindung liegt die Aufgabe zugrunde, ein flexibles Verfahren anzugeben, durch das eine Zulässigkeit eines Aufbaus einer Kommunikationsverbindung zwischen einem vorgebbaren ersten und zweiten Netzknoten sichergestellt wird, sowie eine effiziente Implementierung des Verfahrens zu schaffen.

Erfindungsgemäß wird diese Aufgabe durch ein Verfahren mit den in Anspruch 1 angegebenen Merkmalen und ein Steuerungsprogramm mit den in Anspruch 7 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung liegt darin, daß eine Anforderung zum Aufbau einer gesicherten Kommunikationsverbindung zwischen einem ersten und einem zweiten Netzknoten von einer Kommunikationseinrichtung eines ersten Benutzers an eine Kommunikationseinrichtung eines zweiten Benutzers übermittelt wird und eine den ersten Benutzer identifizierende Kennung sowie einen vorgebbaren verbindungsindividuellen Indikator umfaßt. Anhand in einer dem zweiten Benutzer zugeordneten Datenbasis gespeicherter Einträge wird ein der Kennung des ersten Benutzers zugeordneter Abschnitt einer den ersten Netzknoten identifizierenden Kennung ermittelt. Dies bietet den Vorteil, daß durch Überprüfung einer bestehenden Zuordnung zwischen der Kennung des ersten Benutzers und dem Abschnitt der Kennung des ersten Netzknotens eine Berechtigung des ersten Benutzers zum Zugriff auf eine dem zweiten Netzknoten zugeordnete Ressource auf einfache Weise kontrollierbar ist. Unter Ressource ist beispielsweise ohne Beschränkung der Allgemeinheit dieses Begriffs eine Recheneinheit, eine Kommunikationseinrichtung, eine Speichereinheit, ein Rechenprozeß oder ein Speicherbereich zu verstehen.

Anhand des ermittelten Abschnitts der Kennung des ersten Netzknotens und des verbindungsindividuellen Indikators wird die Kennung des ersten Netzknotens ermittelt. Der vorgebbare verbindungsspezifische Indikator bietet in diesem Zusammenhang Flexibilität hinsichtlich einer Auswahl des ersten Netzknotens. Beispielsweise kann hierdurch gezielt ein Netzknoten spezifiziert werden, von dem aus ein ausgewählter Service-Mitarbeiter auf eine dem zweiten Netzknoten zugeordnete Ressource zugreifen kann. Anhand der Kennung des ersten Netzknotens wird schließlich die gesicherte Kommunikationsverbindung vom zweiten zum ersten Netzknoten aufgebaut.

Die Kennung des ersten Netzknotens kann beispielsweise eine Teilnehmeranschlußnummer in einem Kommunikationsnetz mit Leitungsvermittlung sein. Der verbindungsindividuelle Indikator kann in diesem Fall eine Durchwahlnummer innerhalb einer Kommunikationsanlage sein. Alternativ kann die Kennung des ersten Netzknotens eine Netzwerkadresse und/oder eine Anschlußnummer in einem Kommunikationsnetz mit Paketvermittlung sein. In diesem Fall kann der verbindungsindividuelle Indikator eine Subnetz-Adresse bzw. eine Anschlußnummer sein.

Entsprechend einer vorteilhaften Ausgestaltung der vorliegenden Erfindung umfaßt die Anforderung zum Aufbau einer Kommunikationsverbindung zusätzlich eine Zufallszahl. Bei einem Aufbau der Kommunikationsverbindung vom zweiten zum ersten Netzknoten wird die von der Anforderung umfaßte Zufallszahl mit einer auf Seiten des ersten Benutzers für die gesicherte Kommunikationsverbindung zwischen dem ersten und dem zweiten Netzknoten gespeicherten Zufallszahl auf Übereinstimmung verglichen. Bei Übereinstimmung wird die gesicherte Kommunikationsverbindung aufrechterhalten bzw. aufgebaut. Auf diese Weise werden Manipulationsmöglichkeiten für nichtberechtigte Dritte weiter eingeschränkt. Manipulationsmöglichkeiten für nichtberechtigte Dritte können alternativ oder zusätzlich dazu dadurch weiter eingeschränkt werden, daß die gesicherte Kommunikationsverbindung zwischen dem ersten und dem zweiten Netzknoten anhand auf Seiten des ersten und zweiten Benutzers vorhandener zugehöriger Schlüssel verschlüsselt wird.

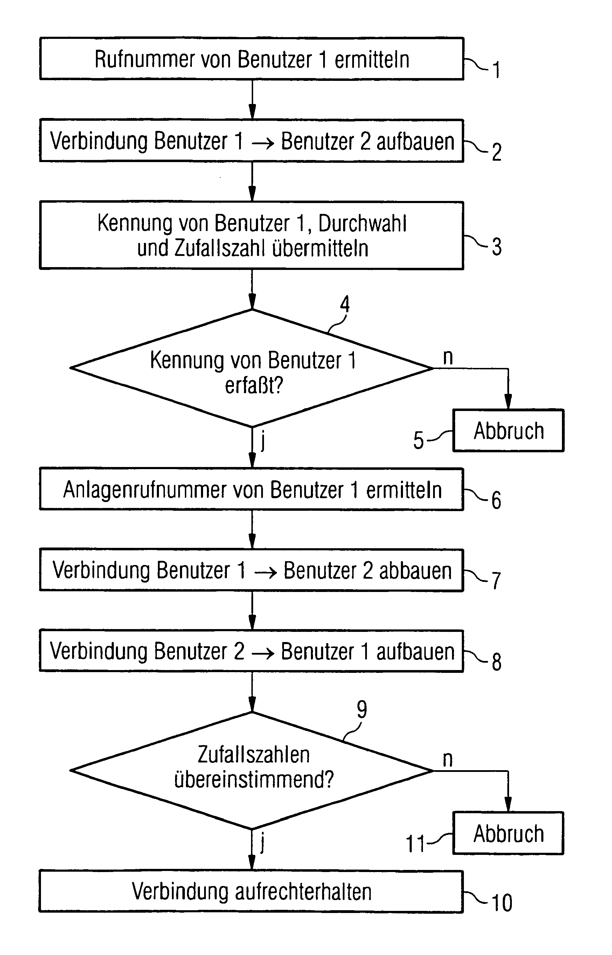

Die vorliegende Erfindung wird nachfolgend an einem Ausführungsbeispiel anhand der Figur näher erläutert. Es zeigt die
- Figur: ein Ablaufdiagramm für einen Aufbau einer gesicherten Kommunikationsverbindung zwischen einem ersten und einem zweiten Netzknoten.

Entsprechend dem in der Figur dargestellten Ablaufdiagramm wird zur Anforderung eines Verbindungsaufbaus zunächst auf Seiten eines ersten Benutzers eine Rufnummer eines zweiten Benutzers ermittelt (Schritt 1). Anschließend wird eine von einer Kommunikationseinrichtung des ersten Benutzers ausgehende Kommunikationsverbindung zu einer Kommunikationseinrichtung des zweiten Benutzers aufgebaut, die über die zuvor ermittelte Rufnummer erreichbar ist (Schritt 2). Vorteilhafterweise ist sowohl auf Seiten des ersten Benutzers als auch auf Seiten des zweiten Benutzers jeweils eine Datenbasis mit technischen Beschreibungen verfügbar. Diese technischen Beschreibungen umfassen insbesondere Angaben, wie sich die beiden Benutzer gegenseitig erreichen können. Die Datenbasen sollten aufeinander abgestimmt sein. Insbesondere ist es von Vorteil, wenn beiden Benutzern eine ihnen beim jeweils anderen Benutzer zugeordnete Kennung bekannt ist.

In einem nächsten Schritt wird eine Anforderung zum Aufbau einer gesicherten Kommunikationsverbindung zwischen einem ersten und einem zweiten Netzknoten übermittelt (Schritt 3). Diese Anforderung umfaßt ein den ersten Benutzer identifizierende Kennung, eine Durchwahlnummer innerhalb einer Kommunikationsanlage zu einem dem ersten Benutzer zugeordneten Anschluß am ersten Netzknoten und eine auf Seiten des ersten Benutzers für eine gesicherte Kommunikationsverbindung erzeugte Zufallszahl mit an jeweilige Sicherheitsanforderungen anpaßbarer Länge.

Auf Seiten des zweiten Benutzers wird nachfolgend überprüft, ob die übermittelte Kennung des ersten Benutzers in einer dem zweiten Benutzer zugeordneten Datenbasis erfaßt ist (Schritt 4), und welche Anlagenrufnummer dem ersten Benutzer zugeordnet ist (Schritt 6). Ist für den ersten Benutzer keine Kennung erfaßt, oder ist ihm keine Anlagenrufnummer zugeordnet so wird der Aufbau einer gesicherten Kommunikationsverbindung zwischen dem ersten und dem zweiten Netzknoten abgebrochen (Schritt 5). Konnte eine dem ersten Benutzer zugeordnete Anlagenrufnummer ermittelt werden, so wird dies dem ersten Benutzer quittiert und daraufhin die vom ersten Benutzer aufgebaute Verbindung abgebaut (Schritt 7).

Aus der ermittelten Anlagenrufnummer und der übermittelten Durchwahl wird eine Rufnummer des ersten Benutzers zusammengesetzt, über die er an einer Kommunikationseinrichtung am ersten Netzknoten erreichbar ist. Anschließend wird auf Seiten des zweiten Benutzers eine Verbindung vom zweiten zum ersten Netzknoten aufgebaut (Schritt 8). Danach wird die zuvor an den zweiten Benutzer übermittelte Zufallszahl mit einer auf Seiten des ersten Benutzers gespeicherten Zufallszahl auf Übereinstimmung verglichen (Schritt 9). Bei Übereinstimmung wird die Verbindung aufrechterhalten (Schritt 10). Andernfalls erfolgt ein Abbruch der Verbindung (Schritt 11).

Das hier beschriebene Verfahren zum Aufbau einer gesicherten Kommunikationsverbindung zwischen einem ersten und einem zweiten Netzknoten ist durch ein Steuerungsprogramm implementiert, das in einen Arbeitsspeicher einer Recheneinrichtung ladbar ist. Bei Ablauf des Steuerungsprogramms in der Recheneinrichtung werden die vorangehend beschriebenen Verfahrensschritte ausgeführt, bzw. ihre Ausführung wird veranlaßt.

Das beschriebene Verfahren ist nicht auf klassische Telefonverbindungen beschränkt, sondern in analoger Weise auf gesicherte Kommunikationsverbindungen in Kommunikationsnetzen mit Paketvermittlung übertragbar. In diesem Fall ist sinngemäß Rufnummer durch Netzwerkadresse bzw. Anschluß (Port) und Durchwahl durch Subnetz-Adresse bzw. Anschlußnummer zu ersetzen.

## Patentansprüche

1. Verfahren zum Aufbau einer gesicherten Kommunikationsverbindung, bei dem
- eine Anforderung zum Aufbau einer Kommunikationsverbindung zwischen einem ersten und einem zweiten Netzknoten von einer Kommunikationseinrichtung eines ersten Benutzers an eine Kommunikationseinrichtung eines zweiten Benutzers übermittelt wird, wobei die Anforderung eine den ersten Benutzer identifizierende Kennung und eine Durchwahlnummer oder eine Subnetz-Adresse umfaßt,
- anhand in einer dem zweiten Benutzer zugeordneten Datenbasis gespeicherter Einträge ein der Kennung des ersten Benutzers zugeordneter Abschnitt einer den ersten Netzknoten identifizierenden Kennung ermittelt wird,
- anhand des ermittelten Abschnitts der Kennung des ersten Netzknotens und der Durchwahlnummer oder der Subnetz-Adresse die Kennung des ersten Netzknotens ermittelt wird,
- anhand der Kennung des ersten Netzknotens eine gesicherte Kommunikationsverbindung vom zweiten zum ersten Netzknoten aufgebaut wird.

2. Verfahren nach Anspruch 1, bei dem eine Berechtigung des ersten Benutzers zum Zugriff auf eine dem zweiten Netzknoten zugeordnete Ressource anhand einer bestehenden Zuordnung zwischen der Kennung des ersten Benutzers und dem Abschnitt der Kennung des ersten Netzknotens überprüft wird.

3. Verfahren nach einem der Ansprüche 1 oder 2, bei dem die Kennung des ersten Netzknotens eine Teilnehmeranschlußnummer in einem Kommunikationsnetz mit Leitungsvermittlung ist.

4. Verfahren nach einem der Ansprüche 1 oder 2, bei dem die Kennung des ersten Netzknotens eine Netzwerkadresse und/oder Anschlußnummer in einem Kommunikationsnetz mit Paketvermittlung ist.

5. Verfahren nach einem der Ansprüche 1 bis 4, bei dem die Anforderung zum Aufbau der Kommunikationsverbindung eine Zufallszahl umfaßt, bei einem Aufbau der Kommunikationsverbindung vom zweiten zum ersten Netzknoten die von der Anforderung umfaßte Zufallszahl mit einer auf Seiten des ersten Benutzers für die gesicherte Kommunikationsverbindung zwischen dem ersten und dem zweiten Netzknoten gespeicherten Zufallszahl auf Übereinstimmung verglichen wird und die gesicherte Kommunikationsverbindung bei Übereinstimmung aufrechterhalten und/oder aufgebaut wird.

6. Verfahren nach einem der Ansprüche 1 bis 5, bei dem die gesicherte Kommunikationsverbindung zwischen dem ersten und dem zweiten Netzknoten anhand auf Seiten des ersten und zweiten Benutzers vorhandener zugehöriger Schlüssel verschlüsselt wird.

7. Steuerungsprogramm, das in einen Arbeitsspeicher einer Recheneinrichtung eines zweiten Netzwerkknotens ladbar ist und zumindest einen Codeabschnitt aufweist, bei dessen Ausführung
- eine Übermittlung einer Anforderung zum Aufbau einer Verbindung zwischen einem ersten und dem zweiten Netzknoten von einer Kommunikationseinrichtung eines ersten Benutzers an eine Kommunikationseinrichtung eines zweiten Benutzers empfangen wird, wobei die Anforderung eine den ersten Benutzer identifizierende Kennung und eine Durchwahlnummer oder eine Subnetz-Adresse umfaßt,
- eine Ermittlung eines der Kennung des ersten Benutzers zugeordneten Abschnitts einer den ersten Netzknoten identifizierenden Kennung anhand in einer dem zweiten Benutzer zugeordneten Datenbasis gespeicherter Einträge veranlaßt wird,
- eine Ermittlung der Kennung des ersten Netzknotens anhand des ermittelten Abschnitts der Kennung des ersten Netzknotens und der Durchwahlnummer oder der Subnetz-Adresse veranlaßt wird,
- ein Aufbau einer gesicherten Kommunikationsverbindung vom zweiten zum ersten Netzknoten anhand der Kennung des ersten Netzknotens veranlaßt wird,
wenn das Steuerungsprogramm in der Recheneinrichtung abläuft.

## Claims

1. Method for setting up a secure communication link, in which
- a request to set up a communication link between a first and a second network node is transmitted from a communication device of a first user to a communication device of a second user, with the request comprising a tag which identifies the first user and a direct-dial number or a subnetwork address,
- a section which is associated with the tag for the first user of a tag which identifies the first network node is determined using entries stored in a database associated with the second user,
- the tag of the first network node is determined using the determined section of the tag of the first network node and the direct-dial number or the subnetwork address,
- the secure communication link is set up from the second to the first network node using the tag of the first network node.

2. Method according to Claim 1, in which an authorization for the first user to access a resource associated with the second network node is checked on the basis of an existing association between the tag of the first user and the section of the tag of the first network node.

3. Method according to one of Claims 1 or 2, in which the tag of the first network node is a subscriber access number in a communication network with line switching.

4. Method according to one of Claims 1 or 2, in which the tag of the first network node is a network address and/or an access number in a communication network with packet switching.

5. Method according to one of Claims 1 to 4, in which the request to set up the communication link comprises a random number, the random number which is formed by the request is compared, when setting up the communication link from the second to the first network node, for a match with a random number which is stored on the part of the first user for the secure communication link between the first and the second network node, and the secure communication link is maintained and/or set up if a match is found.

6. Method according to one of Claims 1 to 5, in which the secure communication link between the first and the second network node is encrypted on the basis of an associated key which is provided on the part of the first and second user.

7. Control program, which can be loaded in a main memory of a computation device for a second network node and has at least one code section which, when run
- results in transmission of a request to set up a link between a first and the second network node from a communication device of a first user to a communication device of a second user being received, with the request comprising a tag which identifies the first user, and a direct-dial number or a subnetwork address,
- a section of a tag which identifies the first network node, with the section being associated with the tag of the first user, being determined using entries stored in a database which is associated with a second user,
- the tag of the first network node being determined using the determined section of the tag of the first network node and the direct-dial number or the subnetwork address,
- the secure communication link being set up from the second to the first network node using the tag of the first network node,
when the control program runs in the computation device.

## Revendications

1. Procédé d'établissement d'une liaison de communication sécurisée, dans lequel :
- une demande d'établissement d'une liaison de communication entre un premier et un deuxième noeuds du réseau est transmise par un dispositif de communication d'un premier utilisateur au dispositif de communication d'un deuxième utilisateur, la demande contenant une caractéristique qui identifie le premier utilisateur et un numéro de sélection ou une adresse de sous-réseau,
- une partie qui associe la caractéristique du premier utilisateur à une caractéristique qui identifie le premier noeud du réseau est déterminée au moyen d'entrées conservées en mémoire dans une base de données associée au deuxième utilisateur,
- la caractéristique du premier noeud du réseau est déterminée au moyen de la partie déterminée de la caractéristique du premier noeud du réseau et du numéro de sélection ou de l'adresse de sous-réseau et
- une liaison de communication sécurisée est établie entre le deuxième et le premier noeuds du réseau au moyen de la caractéristique du premier noeud du réseau.

2. Procédé selon la revendication 1, dans lequel l'autorisation du premier utilisateur à accéder à une ressource associée au deuxième noeud du réseau est vérifiée sur base de la présence d'une association entre la caractéristique du premier utilisateur et la partie de la caractéristique du premier noeud du réseau.

3. Procédé selon l'une des revendications 1 ou 2, dans lequel la caractéristique du premier noeud du réseau est un numéro de raccordement d'abonné d'un réseau de communication à transmission filaire.

4. Procédé selon l'une des revendications 1 ou 2, dans lequel la caractéristique du premier noeud du réseau est une adresse de réseau et/ou un numéro de raccordement dans un réseau de communication à transmission par paquets.

5. Procédé selon l'une quelconque des revendications 1 à 4, dans lequel la demande d'établissement de la liaison de communication comprend un nombre aléatoire, et lors de l'établissement de la liaison de communication entre le deuxième et le premier noeuds du réseau, la correspondance entre le nombre aléatoire contenu dans la demande et un nombre aléatoire conservé en mémoire du côté du premier utilisateur est vérifiée en vue de l'établissement d'une liaison de communication sécurisée entre le premier et le deuxième noeuds du réseau et la liaison de communication sécurisée est maintenue et/ou établie en cas de correspondance.

6. Procédé selon l'une quelconque des revendications 1 à 5, dans lequel la liaison de communication sécurisée entre le premier et le deuxième noeuds du réseau est verrouillée à l'aide d'une clé associée présente chez le premier et chez le deuxième utilisateur.

7. Programme de commande qui peut être chargé dans la mémoire de travail d'un dispositif de calcul d'un deuxième noeud d'un réseau et qui présente au moins une partie codée, et qui, lorsque le programme de commande se déroule dans le dispositif de calcul :
- transmet une demande d'établissement d'une liaison entre un premier et le deuxième noeuds du réseau émise par un dispositif de communication d'un premier utilisateur au dispositif de communication d'un deuxième utilisateur, la demande comprenant une caractéristique qui identifie le premier utilisateur et un numéro de sélection ou une adresse de sous-réseau,
- à l'aide d'entrées conservées en mémoire dans une base de données associée au deuxième utilisateur, lance la détermination d'une partie d'une caractéristique qui identifie le premier noeud du réseau et qui est associée à la caractéristique du premier utilisateur,
- à l'aide de la partie déterminée de la caractéristique du premier noeud du réseau et du numéro de sélection ou de l'adresse de sous-réseau, lance la détermination de la caractéristique du premier noeud du réseau,
- à l'aide de la caractéristique du premier noeud du réseau, lance l'établissement d'une liaison de communication sécurisée entre le premier et le deuxième noeuds du réseau.
